(19) Europäisches Patentamt
European Patent Office
Office européen des brevets

(11) **EP 3 493 230 B1**

(12) **FASCICULE DE BREVET EUROPEEN**

(45) Date de publication et mention
de la délivrance du brevet:
**19.07.2023   Bulletin 2023/29**

(21) Numéro de dépôt: **18208873.2**

(22) Date de dépôt: **28.11.2018**

(51) Classification Internationale des Brevets (IPC):
**H01F 27/38** (2006.01)    **H01F 27/40** (2006.01)
**H01F 27/42** (2006.01)    **H01F 30/12** (2006.01)

(52) Classification Coopérative des Brevets (CPC):
**H01F 27/38; H01F 27/385; H01F 27/42;**
**H01F 30/12;** H01F 2027/408

(54) **TRANSFORMATEUR TRIPHASE POUR REDRESSEUR DODECAPHASE AVEC ENROULEMENT AUXILIAIRE DE CORRECTION DU FACTEUR DE PUISSANCE**

DREIPHASENTRANSFORMATOR FÜR ZWÖLFPULSGLEICHRICHTER MIT HILFSWICKLUNG FÜR DIE LEISTUNGSFAKTORKORREKTUR

THREE-PHASE TRANSFORMER FOR DODECA-PHASE RECTIFIER FOR AUXILIARY WINDING WITH POWER FACTOR CORRECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **30.11.2017   FR 1761397**

(43) Date de publication de la demande:
**05.06.2019   Bulletin 2019/23**

(73) Titulaire: **CHLORIDE**
**69680 Chassieu (FR)**

(72) Inventeur: **BLEIN, Eric**
**69330 Meyzieu (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A2-2014/031959     DE-A1- 2 227 772**
**FR-A1- 3 033 930**

**Description**

DOMAINE TECHNIQUE

L'invention se rattache au domaine de l'électrotechnique, et plus particulièrement des transformateurs triphasés pour redresseur de puissance. L'invention concerne plus spécifiquement une structure de transformateur employée pour alimenter des redresseurs dodécaphasés.

L'invention trouve une application particulièrement avantageuse pour une alimentation continue sans interruption d'une batterie d'accumulateurs, et pour toute application nécessitant la génération d'une tension continue précisément régulée. Ainsi, l'invention vise plus particulièrement une configuration qui permet d'augmenter le facteur de puissance et de réduire le taux de distorsion harmonique en courant d'un convertisseur de tension alternatif/continu.

ARRIERE-PLAN DE L'INVENTION

De façon générale, les installations de conversion d'énergie électrique sont de plus en plus exigeantes en termes de performances. Ainsi, il est généralement réclamé aux convertisseurs alternatifs/continus de délivrer des tensions les plus constantes possibles en dépit des variations de charge en régime continu (DC) et des fluctuations de la tension d'alimentation en régime alternatif (AC), tout en générant sur le réseau alternatif, ou de manière plus générale sur la source d'alimentation électrique, des courants réduits et des perturbations harmoniques les plus faibles possibles. Pour ce faire, il est recherché un facteur de puissance le plus proche possible de 1 avec un taux de distorsion harmonique en courant inférieur ou égal à 5%.

Pour répondre à ces contraintes, des technologies de redresseur à découpage haute fréquence mettant en oeuvre des transistors bipolaires à grille isolée (également connu sous l'acronyme IGBT) sont connues. Cependant, ces convertisseurs sont complexes et intègrent un dispositif de précharge non statique. En outre, ces transistors sont plus fragiles que des dispositifs avec redressement classique à thyristor.

L'invention concerne la technologie des redresseurs à thyristors qui possèdent une robustesse éprouvée comparativement aux technologies de redressement à base de transistors IGBT, tel que décrit dans le document FR 3 033 930.

Avec la technologie de convertisseur à thyristors, il est possible d'obtenir un redresseur à transformateur avec un taux de distorsion harmonique en courant de l'ordre de 5% en utilisant des redresseurs dodécaphasés avec des inductances appropriées formant un filtrage inductif au niveau du transformateur. Cependant, ce filtrage inductif dégrade le facteur de puissance du convertisseur.

Il n'existe pas de convertisseur simple et compact intégrant un transformateur et un redresseur dodécaphasé à thyristors, ayant un taux de distorsion harmonique en courant de l'ordre de 5% et un facteur de puissance proche de l'unité, c'est-à-dire supérieur à 0.94 en redressement pleine onde.

Un convertisseur AC/DC à thyristors qui régule précisément une tension de sortie pour des fluctuations réseau en régime alternatif de +/-10% peut être utilisé pour un chargeur de batterie avec un seul mode de charge. Ce type de convertisseur AC/DC intègre classiquement un transformateur et un redresseur dodécaphasé. Il présente un facteur de puissance inférieur ou égal à 0.85. Ce facteur de puissance est conditionné par les modes de charge batterie et par la tolérance du réseau d'entrée et peut se trouver dégradé en dessous de 0.8 pour des chargeurs avec plusieurs modes de charge batterie ce qui est fréquemment le cas dans des installations industrielles avec des batteries ouvertes.

Pour améliorer ce facteur de puissance, il est possible d'utiliser un filtre de correction de facteur de puissance formé par un réseau de condensateurs et placé en amont du redresseur. Cependant, ce filtre de correction du facteur de puissance n'a pas d'influence sur les harmoniques de courant générés par le redresseur dodécaphasé, et l'abaissement du courant d'entrée se traduit par une augmentation du taux de distorsion harmonique en courant.

Il est ainsi possible d'augmenter ce facteur de puissance jusqu'à l'unité par l'ajout d'un filtre de correction du facteur de puissance. Cependant, les condensateurs additionnels doivent présenter une capacité importante pour réaliser la puissance réactive nécessaire. Cette solution n'est donc pas envisageable si l'encombrement du convertisseur est un facteur limitatif, et de plus le taux de distorsion harmonique en courant (THDI) va être nécessairement très supérieur à 5%.

Il est également possible d'augmenter le facteur de puissance en utilisant un convertisseur redresseur à thyristors suivi d'un hacheur abaisseur à découpage disposés en aval du redresseur. Le redresseur fonctionne en redresseur pleine onde donnant une tension DC non régulée, et c'est le hacheur abaisseur qui régule la tension de sortie DC susceptible d'alimenter une batterie.

Cette solution permet d'obtenir un convertisseur ayant un facteur de puissance de l'ordre de 0.94 et un taux de distorsion harmonique en courant (THDI) de l'ordre de 5%.

Le problème technique de l'invention est d'obtenir un convertisseur de tension compact et plus performant, c'est-à-dire avec un facteur de puissance supérieur à 0.94 et proche de l'unité, et un taux de distorsion harmonique en courant inférieur ou égal à 5%.

EXPOSE DE L'INVENTION

Pour résoudre ce problème technique, l'invention propose de former un filtre harmonique et de correction du facteur de puissance en modifiant la structure du transformateur pour que les inductances de ce filtre harmonique soient contenues dans la structure du transformateur. Pour ce faire, trois enroulements auxiliaires sont disposés entre les enroulements primaires et secondaires du transformateur, autour de chaque colonne du noyau magnétique principal et du premier noyau selfique. Un second noyau selfique est également utilisé. Celui-ci comporte trois colonnes, chacune des colonnes étant disposée entre une paire d'enroulements auxiliaires et une paire d'enroulements primaires. Ces enroulements auxiliaires sont configurés pour être connectés à des condensateurs et pour former le filtre harmonique et de correction du facteur de puissance.

A cet effet, l'invention concerne un transformateur triphasé pour redresseur dodécaphasé à thyristors selon la revendication 1.

Au sens de l'invention, un filtre harmonique et de correction du facteur de puissance correspond à un filtre passe-bande, dont la fréquence de résonance est centrée sur une harmonique de la tension d'alimentation du transformateur.

Contrairement à un filtre passe-bande classique, le filtre harmonique et de correction du facteur de puissance permet d'obtenir un amortissement sur l'harmonique correspondant à la fréquence de résonance ainsi que sur des harmoniques voisines.

Pour ce faire, les enroulements auxiliaires sont couplés magnétiquement avec les enroulements primaires et avec les enroulements secondaires. De même, les enroulements primaires sont couplés avec les enroulements secondaires et auxiliaires et les enroulements secondaires sont couplés avec les enroulements primaires et auxiliaires.

Lorsque le filtre harmonique est centré sur l'harmonique de rang 5 (H5), les couplages magnétiques entre les enroulements primaires, secondaires et auxiliaires constituent des inductances, et permettent d'adapter efficacement le filtre harmonique pour filtrer les harmoniques de rang supérieur à 5, principalement 11 et 13, générés par les secondaires du transformateur. Le second noyau inductif situé entre primaire et auxiliaire constitue une inductance série, qui permet de bloquer les harmoniques de courant externes au redresseur qui pourraient être absorbées par le filtre harmonique interne, en formant ainsi un filtre passe bas.

Contrairement à l'utilisation d'un filtre harmonique externe, et à la réalisation de l'inductance série de protection pour le redresseur qui nécessite la réalisation d'au moins deux circuits magnétiques triphasés externes, les couplages magnétiques permettent de former toutes ces inductances avec seulement trois enroulements et trois noyaux, c'est-à-dire un enroulement et un noyau pour chaque phase. L'invention permet donc d'obtenir un convertisseur AC/DC très compact.

Ainsi, ce filtre harmonique permet d'améliorer grandement les performances du convertisseur avec un facteur de puissance supérieur à 0.94 et un taux de distorsion harmonique en courant inférieur à 5%.

En outre, cette structure de transformateur peut être utilisée avec des tensions primaires et secondaires très variées, avec une correction du facteur de puissance indépendante du niveau de tension. Cette structure permet, ainsi, de standardiser les tensions des condensateurs de correction, quelles que soient les tensions primaire ou secondaire.

Selon un mode de réalisation, les colonnes du second noyau selfique comportent des entrefers et sont reliées magnétiquement à leurs extrémités par deux culasses de fermeture de champ.

Selon un mode de réalisation de l'invention, les colonnes du second noyau selfique comportent des entrefers et sont reliées magnétiquement à leurs extrémités par deux culasses de fermeture de champ.

Ce mode de réalisation est particulièrement adapté pour de fortes puissances. En outre, ce mode de réalisation permet d'obtenir une bonne tenue mécanique du second noyau selfique qui peut être lourd.

En variante, le second noyau selfique peut être réalisé par des assemblages de tôles magnétiques empilées sur des profondeurs variables sans culasse en partie haute et basse pour de faibles puissances de transformateur.

Selon un mode de réalisation de l'invention, le transformateur comporte deux séries de trois connecteurs de sorties connectés sur chaque couple de deux enroulements auxiliaires et destinés à relier chaque couple de deux enroulements auxiliaires avec un ensemble de trois condensateurs de sorte à former deux filtres harmoniques et de correction du facteur de puissance.

Ce mode de réalisation permet de filtrer efficacement les harmoniques résultantes du convertisseur en distinguant le couplage des parties hautes et basses du transformateur.

Selon un mode de réalisation de l'invention, le transformateur comporte trois connecteurs de sorties connectés sur chaque couple de deux enroulements auxiliaires reliés deux à deux et destinés à relier trois condensateurs avec les enroulements auxiliaires de sorte à former un filtre harmonique et de correction du facteur de puissance.

Ce mode de réalisation permet de réduire l'encombrement du convertisseur en limitant le nombre de condensateurs.

Selon un mode de réalisation de l'invention, chaque enroulement primaire d'une même colonne est enroulé sur un des enroulements auxiliaires de ladite colonne, lui-même enroulé sur un des enroulements secondaires de ladite colonne.

Ce mode de réalisation permet d'optimiser le couplage entre les différents enroulements primaires, secondaires et auxiliaires d'une même colonne, tout en évitant les couplages parasites entre plusieurs colonnes.

La suppression, ou à tout le moins la très forte limitation des fuites magnétiques fait qu'il est ainsi possible d'utiliser des conducteurs pour les enroulements primaires, secondaires et/ou auxiliaires qui peuvent être réalisés à partir de feuillard métallique, autorisant ainsi l'utilisation du transformateur avec des intensités particulièrement élevées.

Au sens de l'invention, le taux de distorsion harmonique en courant correspond au rapport entre la valeur efficace du résidu harmonique et la valeur efficace de la composante fondamentale tel que décrit dans la norme IEC60146-1-1. En outre, le vocabulaire électrotechnique international décrit dans la norme IEC60050 utilise l'expression de « taux de distorsion harmonique » en français, alors que la traduction anglaise est « *harmonie distortion* ».

Au sens de l'invention, la tension en court-circuit correspond à la composante réactive de l'impédance de court-circuit, telle que décrite dans les normes IEC60076-1 et IEC60076-11. En outre, le vocabulaire électrotechnique international décrit dans la norme IEC60050 utilise l'expression de « tension de court-circuit » en français, alors que la traduction anglaise est « *impédance voltage* ».

Selon un mode de réalisation de l'invention, le second noyau selfique est choisi de sorte que la tension en court-circuit soit sensiblement égale à 30% lorsque le transformateur comporte les deux noyaux selfiques.

Selon un second aspect, l'invention concerne un convertisseur de tension comportant :

- un transformateur selon le premier aspect de l'invention ;
- deux redresseurs dodécaphasés double alternance triphasés ; et
- au moins trois condensateurs connectés sur les trois connecteurs de sorties de sorte à former au moins un filtre harmonique et de correction du facteur de puissance.

Selon un mode de réalisation, lesdits au moins trois condensateurs sont choisis de sorte que la capacité de chaque condensateur soit sensiblement égale à :

$$C = \frac{Q}{3\omega V^2} \; ;$$

avec Q correspondant à la puissance réactive nécessaire du filtre harmonique et de correction du facteur de puissance pour obtenir un facteur de puissance de 1 ;
*V* correspondant à une tension simple d'un enroulement auxiliaire ; et
$\omega$ correspondant à la pulsation du signal d'entrée du convertisseur.

Selon un mode de réalisation, les redresseurs dodécaphasés sont reliés en parallèle ou en série.

DESCRIPTION SOMMAIRE DES FIGURES

La manière de réaliser l'invention, ainsi que les avantages qui en découlent, ressortiront bien de la description des modes de réalisations qui suivent, à l'appui des figures annexées dans lesquelles :

- la figure 1 est un schéma électrique simplifié montrant un convertisseur alternatif continu incluant un transformateur selon un mode de réalisation ne faisant pas partie de l'invention ;
- la figure 2 est une vue en perspective sommaire d'une colonne d'un transformateur conforme à l'invention ;
- la figure 3 est une vue en coupe d'un transformateur conforme à l'invention ;
- la figure 4 est un schéma électrique simplifié montrant un convertisseur alternatif continu incluant un transformateur selon un premier mode de réalisation de l'invention ;
- la figure 5 est un schéma électrique simplifié montrant un convertisseur alternatif continu incluant un transformateur selon un second mode de réalisation de l'invention ;
- la figure 6 est un schéma électrique simplifié montrant l'ensemble des inductances d'une phase ramenées au primaire du convertisseur de la figure 4 ;
- la figure 7 est une représentation de l'évolution temporelle du courant et de la tension au primaire du convertisseur de la figure 4 ;
- la figure 8 est une représentation de l'évolution temporelle du courant au primaire, d'un courant secondaire, et du courant dans un ensemble de condensateurs d'un filtre harmonique et de correction du facteur de puissance du convertisseur de la figure 4 ;
- la figure 9 est une représentation spectrale du courant au primaire du convertisseur de la figure 4 ;

- la figure 10 est une représentation spectrale du courant au secondaire du convertisseur de la figure 4 ; et
- la figure 11 est une représentation spectrale du courant dans un ensemble de condensateurs d'un filtre harmonique et de correction du facteur de puissance du convertisseur de la figure 4.

DESCRIPTION DETAILLEE

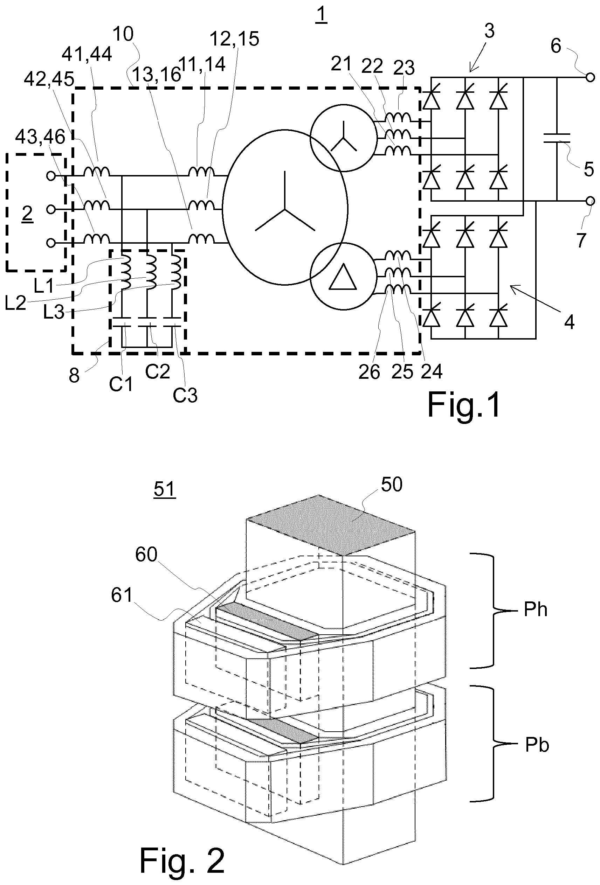

Tel qu'illustré sur la figure 1, un mode de réalisation ne faisant pas partie de l'invention concerne un transformateur **10,** faisant partie d'un convertisseur **1** assurant une conversion alternatif-continu. Plus précisément, le transformateur **10** est relié en entrée à une source de de tension triphasée **2.** En sortie, le transformateur **10** est relié à deux redresseurs triphasés double alternance à thyristors **3,4** dont les sorties sont reliées en parallèle sur un condensateur de filtrage **5** permettant de délivrer une tension continue entre les bornes de sortie **6,7.**

Dans l'exemple de la figure 1, les deux redresseurs triphasés double alternance **3, 4** sont connectés en parallèle sur le condensateur de filtrage **5,** mais il est possible d'utiliser un redresseur triphasé double alternance connecté en série sans changer l'invention.

Le transformateur **10** comporte six inductances primaires **11-16,** reliée par paires **11,14** ; **12,15** ; **13,16,** à l'une des phases de la source d'alimentation triphasée **2.** Complémentairement, le transformateur **10** comporte également six inductances secondaires **21-26** couplées chacune avec l'une des inductances primaires **11-16.** Les inductances secondaires **21-26** sont réparties en deux séries.

La première série d'inductances secondaires **21, 22, 23** est connectée en étoile au premier redresseur **3** de manière à délivrer un système de tensions déphasées de 0° par rapport au primaire. La seconde série d'enroulements secondaires **24, 25, 26** est connectée en triangle au second redresseur **4,** de manière à délivrer un système de tensions déphasées de 30° par rapport au primaire.

Complémentairement, le transformateur **10** comporte six inductances d'entrée **41-46** connectées chacune d'une part à une inductance primaire **11-16,** et d'autre part à une des phases de la source d'alimentation **2.** Ces inductances d'entrée **41-46** réalisent un premier filtrage des harmoniques.

Un second filtrage est réalisé par un filtre harmonique et de correction du facteur de puissance **8** qui réalise à la fois un filtrage des harmoniques de rang supérieur à 5 et une amélioration du facteur de puissance.

Ce filtre harmonique **8** est constitué d'un réseau d'inductances auxiliaires **L1-L3** connectées avec un réseau de condensateurs **C1-C3.** Chaque inductance auxiliaire **L1- L3** est connectée, d'une part, entre une inductance d'entrée **41-46** et un enroulement primaire **11-16,** et, d'autre part, à un condensateur **C1-C3.**

Les condensateurs **C1-C3** sont reliés en étoile et sont disposés à l'extérieur du transformateur **10.** Pour connecter les inductances auxiliaires **L1- L3** avec les condensateurs **C1-C3,** le transformateur **10** comporte des connecteurs de sorties **80-82.**

Dans le schéma électrique simplifié de la figure 1, l'isolement des inductances auxiliaires **L1- L3** est supprimé, pour mettre en évidence les trois inductances auxiliaires **L1- L3** ramenées au primaire autour de la correction du facteur de puissance.

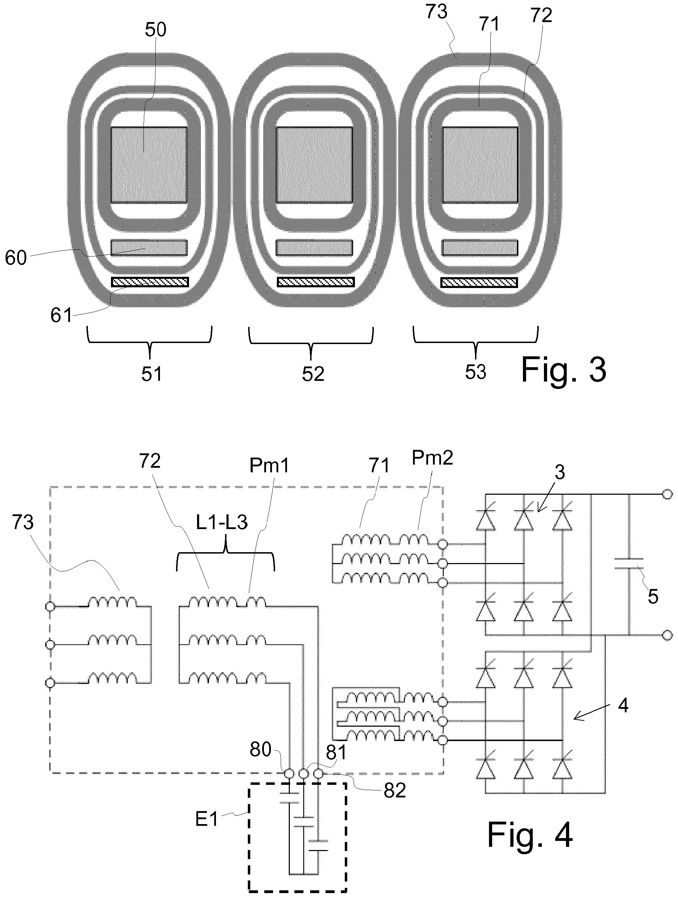

Contrairement à des éléments discrets, les inductances primaires **11-16,** secondaires **21-26,** d'entrée **41-46** et auxiliaires **L1-L3** sont obtenues par des enroulements physiques **71-73** et par des couplages entre ces enroulements. Pour obtenir l'ensemble de ces inductances, le transformateur **10** comporte physiquement trois colonnes **51-53** juxtaposées supportant, chacune, trois couples d'enroulements, tel qu'illustré sur la figure 3.

Tel qu'illustré sur la figure **2,** une colonne **51** comporte un noyau principal **50,** un premier noyau selfique **60** et un second noyau selfique **61.** Le noyau principal **50** se présente sous la forme d'un empilement de tôles magnétiques de section carrée ou rectangulaire.

Le premier noyau selfique **60** est de forme rectangulaire et il présente une section plus petite que la section du noyau principal **50.** De préférence, la surface de la section du premier noyau selfique **60** est cinq fois plus petite que la surface de la section du noyau principal **50.**

Le second noyau selfique **61** présente des dimensions telles qu'il permet la réalisation d'une inductance primaire-secondaire approximativement deux fois plus faible que celles obtenues avec le premier noyau selfique **60.** Ce qui mène à obtenir une inductance primaire-secondaire 1,5 fois plus grande avec les deux noyaux selfiques **60, 61** que celle obtenue avec le seul premier noyau selfique **60.**

Chaque colonne **51-53** comporte une partie basse **Pb** et une partie haute **Ph** supportant, chacune, les couples de trois enroulements **71-73.**

Tel qu'illustré sur les figures 1 et 2, sur chaque partie **Pb, Ph** de chaque colonne **51-53,** le transformateur **10** comporte trois enroulements **71-73** enroulés les uns sur les autres de sorte à limiter les couplages entre les enroulements **71-73** des différentes parties **Pb, Ph** et de différentes colonnes **51-53.**

Au plus près du noyau principal **50,** le transformateur **10** comporte un enroulement secondaire **71** bobiné autour du noyau principal **50.** Le premier noyau selfique **60** est disposé au contact d'une portion externe de cet enroulement secondaire **71.** Un enroulement auxiliaire **72** est bobiné autour de l'enroulement secondaire **71** et du premier noyau selfique **60**.

Le second noyau selfique **61** est disposé au contact d'une portion externe de cet enroulement auxiliaire **72**. Pour finir, un enroulement primaire **73** est bobiné autour de l'enroulement auxiliaire **72** et du second noyau selfique **61**.

Les inductances primaires **41-46**, auxiliaires **L1-L3**, et secondaires ramenées au primaire **11-16** sont obtenues par les enroulements primaires **73**, auxiliaires **72** et secondaire **71** ainsi que par les fuites magnétiques générées par les noyaux selfiques **60** et **61**. Les enroulements primaires **73** enserrant à la fois le second noyau selfique **61**, le premier noyau selfique **60** et le noyau principal **50**, ce dernier étant lui-même entouré par les enroulements secondaires **71** et auxiliaires **72**, c'est l'insertion du second noyau **61** qui augmentent et contrôlent la fuite magnétique, et constituent les inductances primaires **41-46**.

De la même manière, les inductances auxiliaires **L1- L3** sont obtenues par les enroulements auxiliaires **72** et par les fuites magnétiques générées par le premier noyau selfique **60** et par le second noyau selfique **61**.

Les inductances secondaires **21-26** sont obtenues directement par les enroulements secondaires **71**. Au contraire, les inductances d'entrée **41-46** sont obtenues uniquement par les fuites générées par le premier noyau selfique **60** et le second noyau selfique **61**.

Pour gérer ces fuites, le noyau principal **50** présente trois colonnes **51-53** reliées en partie haute **Ph** et basse **Pb** par des portions formant les culasses. Bien entendu, ce noyau principal **50** peut être réalisé selon les règles de l'art pour optimiser les performances en termes de rendement, et notamment en ce qui concerne le choix des matériaux employés, la constitution feuilletée, et l'assemblage des différents éléments que forment les colonnes et les culasses, qui peuvent être monolithiques ou formées par l'assemblage de pièces distinctes.

Ainsi, pour les petites puissances, il est envisageable d'utiliser des circuits magnétiques type E-I à savoir que les trois colonnes **51-53** et une des culasses sont rassemblées au sein d'une pièce en forme générale de E, celui-ci étant fermé par une unique culasse en forme de I. D'un point de vue pratique, les puissances pouvant être importantes, les trois colonnes **51-53** sont généralement individualisées et fermées par deux culasses.

Les deux noyaux selfiques **60** et **61** peuvent être réalisés par des assemblages de tôles magnétiques empilées sur des profondeurs variables sans culasse en partie haute et basse. En variante, les noyaux selfiques **60** et **61** peuvent être composées de colonnes de tôles magnétiques comportant des entrefers et fermées en haut et en bas par des culasses refermant les circuits magnétiques. Les entrefers permettent de régler la valeur de l'inductance formée par les enroulements réalisés autour de chaque colonne.

La manière de dimensionner les éléments du transformateur **10** est décrite ci-après pour un exemple de réalisation avec une source de tension **2** de trois phases de 400 V alternatif permettant d'obtenir un chargeur 24V-250Adc. Dans cet exemple, le bus DC en amont du hacheur abaisseur est supérieur à 50Vdc, et le transformateur mis en oeuvre possède une tension secondaire (U2) entre phase de 47.4V et un courant secondaire (I2) de 6 1 Aeff.

La première étape du dimensionnement consiste à réaliser les enroulements primaires **73**, auxiliaires **72** et secondaires **71** ainsi que le noyau magnétique principal **50** et le premier noyau selfique **60** en utilisant les règles de l'art de telle sorte à obtenir un transformateur **10** sans second noyau selfique **61** qui présente les caractéristiques suivantes :

- un taux de distorsion harmonique en courant (THDI) inférieur à 5% ; et
- une tension en court-circuit (UccX) sensiblement égale à 20%.

Le second noyau selfique est ensuite déterminé de sorte que la tension en court-circuit (UccX) soit sensiblement égale à 30% lorsque le transformateur comporte les deux noyaux selfiques **60** et **61**.

La correction du facteur de puissance est réalisée en déterminant la capacité C de chaque condensateur **C1-C3**. Pour ce faire, il est nécessaire de déterminer le *cos* $\varphi$ du convertisseur sans l'ensemble de condensateurs **C1-C3**. Par exemple, le *cos* $\varphi$ peut être mesuré à 0.9 sans correction de facteur de puissance. Il est ainsi possible de déterminer la puissance réactive capacitive **Q** à ajouter selon la relation suivante :

$$Q = S.sin\varphi = 1.732.U2.I2.2.\sqrt{1 - (cos\varphi)^2}$$

Soit une puissance réactive capacitive **Q** de 4366 VA.

Comme la puissance réactive capacitive **Q** est égale à la puissance réactive inductive du redresseur, la puissance réactive capacitive **Q** correspond également à la relation suivante :

$$Q = 3.V.I = 3.V.C.\omega.V$$

avec : V correspondant à une tension d'un enroulement auxiliaire,
I correspondant au courant dans l'ensemble de condensateurs **C1-C3** ;

$\omega$ correspondant à la pulsation du signal d'entrée du convertisseur **1** ; et
C correspondant à une capacité d'un condensateur **C1-C3**.

Ainsi, la capacité C de chaque condensateur **C1-C3** est sensiblement égale à :

$$C = \frac{Q}{3\omega V^2}$$

Selon l'exemple numérique, la capacité C de chaque condensateur **C1-C3** doit être sensiblement égale à $\frac{4366}{3.2.\pi.50.230^2}$ , soit 87.5 $\mu$F. Cette capacité C spécifique de condensateur étant particulièrement précise, il est possible de sélectionner un condensateur standard proche dont la capacité est proche de cette capacité C, déterminée numériquement. Par exemple, dans cet exemple numérique, il est possible de sélectionner des condensateurs C1-C3 avec une capacité de 100$\mu$F.

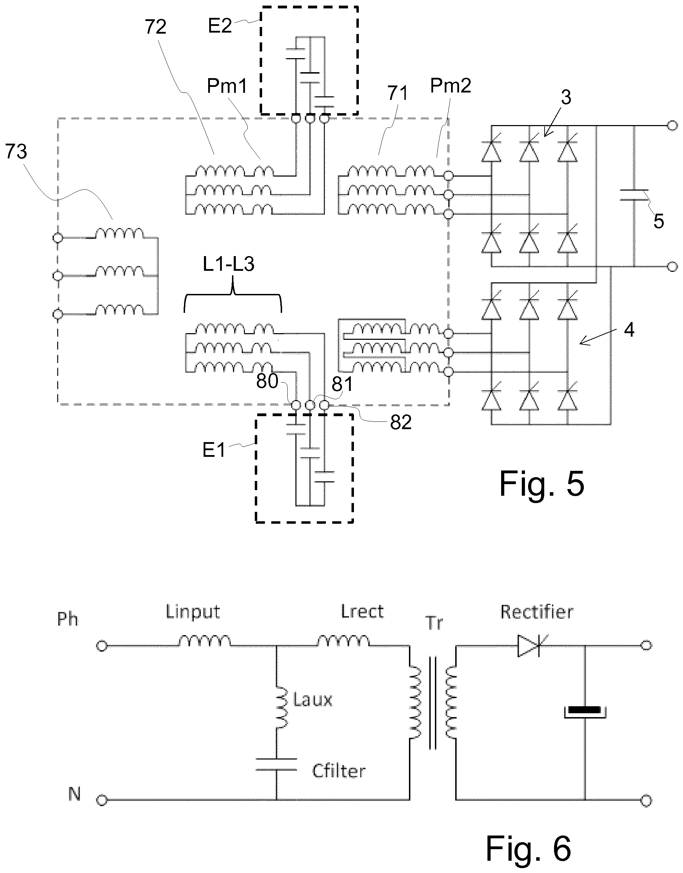

Il est également possible de définir les valeurs théoriques de l'ensemble des inductances ramenées au primaire Lrect, Laux, Linp du schéma équivalent simplifié de la figure 6 en réalisant trois essais de court-circuit :

- un premier essai dans lequel les enroulements secondaires sont en court-circuit, le transformateur est alimenté par les enroulements primaires et les enroulements auxiliaires ne sont pas alimentés. Ce premier essai permet de mesurer une première inductance LA correspondant à Linput + Lrect.
- un second essai dans lequel les enroulements auxiliaires sont en court-circuit, le transformateur est alimenté par les enroulements primaires et les enroulements secondaires ne sont pas alimentés. Ce second essai permet de mesurer une seconde inductance LB correspondant à Linput + Laux.
- un troisième essai dans lequel les enroulements secondaires sont en court-circuit, le transformateur est alimenté par les enroulements auxiliaires et les enroulements primaires ne sont pas alimentés. Ce troisième essai permet de mesurer une troisième inductance LC correspondant à Laux + Lrect.

A partir de cette détermination de valeurs inductives LA, LB, LC, les valeurs de Linput, Laux, Lrect peuvent être obtenues.

Il est ainsi possible de déterminer les fréquences de résonance des différents filtres obtenues par ces inductances. Une première fréquence de résonance F1 correspond au filtre LC formé par le condensateur Cfilter et l'inductance Laux. Une seconde fréquence de résonance F2 correspond au filtre LC formé par le condensateur Cfilter et les inductances Linput + Laux.

Les essais de l'invention ont montré qu'il était possible d'obtenir un résultat particulièrement performant pour améliorer le facteur de puissance et le taux de distorsion en courant en réglant les fréquences de résonance selon les équations suivantes :

$$F1 > 5\,F\;;$$

et

$$3F < F2 < 4\,F$$

avec F la fréquence d'entrée du transformateur **10**.

Le filtre d'entrée (Linput+Laux).Cfilter se comporte comme un filtre passe bas accordé sur des harmoniques de rang faible H3, H4 qui sont peu répandus sur les réseaux triphasés, l'inductance Linput déplaçant la fréquence de résonance du filtre capacitif pour l'écarter des harmoniques extérieurs H5 et H7 très répandus sur ces mêmes réseaux. En outre, ce filtre (Linput+Laux).Cfilter présente un gain de quelques pourcents (et non une atténuation), qui contribue à contrebalancer les effets des chutes de tension engendrées par le cumul des inductances Linput et Lrect.

Ce filtre harmonique et de correction du facteur de puissance **8** peut être intégré au transformateur **10** soit par un seul ensemble **E1** de condensateurs **C1-C3,** tel qu'illustré sur la figure 4, soit par deux ensembles **E1, E2** de condensateurs **C1-C3,** tel qu'illustré sur la figure 5.

Dans le premier cas, tel qu'illustré sur la figure 4, les enroulements auxiliaires **72** des parties hautes **Ph** et basses **Pb** de chaque colonne **51-53** sont reliés entre eux et forment, avec les fuites magnétiques **Pm1,** les inductances auxiliaires **L1-L3.** Les fuites magnétiques **Pm2** correspondent aux fuites magnétiques entre primaire et secondaire, illustrées au secondaire du schéma équivalent de la figure 6. Sur le schéma électrique équivalent de la figure 4, ces inductances auxiliaires **L1-L3** sont représentées au primaire.

Dans le second cas, tel qu'illustré sur la figure 5, les enroulements auxiliaires **72** des parties hautes **Ph** et basses **Pb** de chaque colonne **51-53** sont connectés indépendamment à deux ensembles **E1-E2** de condensateurs. Cette dissociation des parties hautes **Ph** et basses **Pb** permet de contrôler plus précisément le couplage entre les enroulements auxiliaire **72** et secondaire **71,** par exemple lorsque les flux de fuite triangle et étoile sont importants.

L'invention permet ainsi d'obtenir un convertisseur de tension compact et performant, c'est-à-dire avec un facteur de puissance supérieur à 0.94 et un taux de distorsion harmonique en courant inférieur ou égal à 5%.

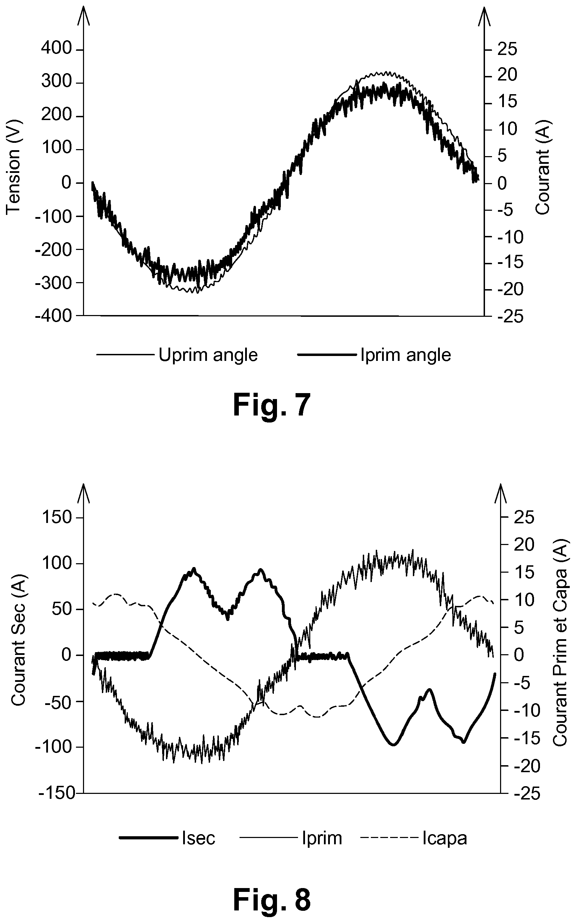

Par exemple, les figures 7 à 11 illustrent les résultats obtenus par un convertisseur **1** intégrant un transformateur **10** avec deux noyaux selfiques et un ensemble **E1** de condensateurs **C1-C3.** Les mesures effectuées sur ce convertisseur **1** indiquent un facteur de puissance de 0.998 et un taux de distorsion harmonique en courant de 4.07%.

La figure 7 révèle que le courant est pratiquement en phase avec la tension comparativement aux mesures des transformateurs de l'état de la technique. En outre, la figure 8 révèle que les perturbations du courant au primaire sont limitées.

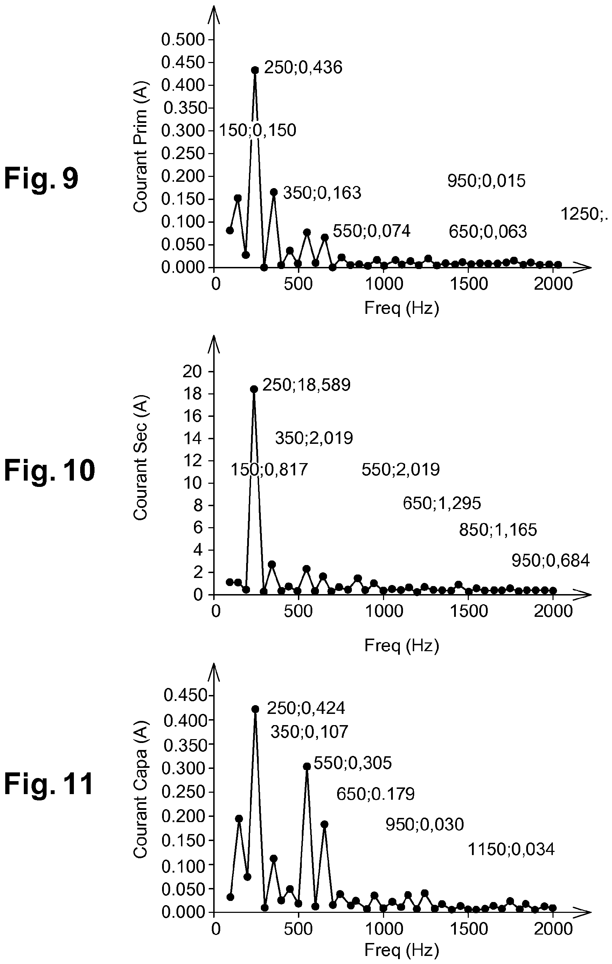

Sur les représentations spectrales des figures 9 à 11 décrivant les spectres harmoniques des courants primaires, secondaires et auxiliaires, il est visible que les condensateurs **C1-C3** absorbent les courants des harmoniques de rang 11 et 13. Tel qu'illustré sur la figure 9, seules les harmoniques de rang faible 3, 5, 7 sont présentes au primaire mais avec des amplitudes limitées du fait du filtrage réalisé par l'inductance Linput.

Outre ces bonnes performances, ce convertisseur **1** est peu sensible aux variations de la source de tension **2.**

**Revendications**

1. Transformateur triphasé (10) pour redresseur dodécaphasé à thyristors comportant un premier et un second redresseur double alternance triphasé (3, 4), le transformateur triphasé (10) comportant :

   • un noyau magnétique principal (50) composé de trois colonnes (51, 52, 53) reliées magnétiquement en parallèle au niveau de leurs extrémités par deux culasses, chacune desdites colonnes recevant :

      - deux enroulements primaires (73) connectés en parallèle ;
      - deux enroulements secondaires (71), trois des enroulements secondaires (71) enroulés sur des colonnes distinctes étant connectés en étoile aux bornes du transformateur triphasé (10) et étant adaptés pour être reliés au susdit premier redresseur double alternance triphasé (3), les trois autres enroulements secondaires (71) étant connectés en triangle aux bornes du transformateur triphasé (10) et étant adaptés pour être reliés au susdit second redresseur double alternance triphasé (4) ; et

   • un premier noyau selfique (60) comportant trois colonnes, sur chacune des colonnes étant enroulée l'une desdites paires d'enroulements primaires (73);

   **caractérisé en ce que** le transformateur triphasé (10) comporte également :

   • trois paires d'enroulements auxiliaires (72) enroulés, entre les enroulements primaires et secondaires, autour de chaque colonne (51, 52, 53) du noyau magnétique principal (50) et du premier noyau selfique (60)
   • un second noyau selfique (61) comportant trois colonnes, chacune des colonnes étant disposée entre une paire d'enroulements auxiliaires (72) et une paire d'enroulements primaires (73) ; et
   • trois connecteurs de sortie (80-82) connectés avec les enroulements auxiliaires (72) et étant adaptés à être reliés à au moins trois condensateurs (C1-C3) avec les enroulements auxiliaires (72), de sorte à former au moins un filtre harmonique et de correction du facteur de puissance (8).

2. Transformateur triphasé selon la revendication 1, **dans lequel** les colonnes du second noyau selfique (61) comportent des entrefers et sont reliées magnétiquement à leurs extrémités par deux culasses de fermeture de champ.

3. Transformateur triphasé selon l'une des revendications 1 et 2, **dans lequel** le transformateur comporte deux séries de trois connecteurs de sortie (80-82) connectés sur chaque couple de deux enroulements auxiliaires (72), et étant adaptés à relier chaque couple de deux enroulements auxiliaires (72) avec un ensemble (E1-E2) de trois condensateurs (C1-C3) de sorte à former deux filtres harmoniques et de correction du facteur de puissance (8).

4. Transformateur triphasé selon l'une des revendications 1 et 2, **dans lequel** le transformateur comporte trois connecteurs de sortie (80-82) connectés sur chaque couple de deux enroulements auxiliaires (72) reliés deux à deux et adaptés à relier trois condensateurs (C1-C3) avec les enroulements auxiliaires (72) de sorte à former un filtre harmonique et de correction du facteur de puissance (8).

5. Transformateur triphasé selon l'une des revendications 1 à 4, **dans lequel** chaque enroulement primaire (73) d'une même colonne (51-53) est enroulé sur l'un des enroulements auxiliaires (72) de ladite colonne, lui-même enroulé sur l'un des enroulements secondaires (71) de ladite colonne.

6. Transformateur triphasé selon l'une des revendications 1 à 5, **dans lequel** le second noyau selfique (61) est choisi de sorte que la tension en court-circuit (UccX) soit sensiblement égale à 30%.

7. Convertisseur de tension (1) comportant :

   - un transformateur (10) selon l'une des revendications 1 à 6 ;
   - deux redresseurs (3,4) dodécaphasés double alternance triphasés ; et
   - au moins trois condensateurs (C1-C3) connectés sur les trois connecteurs de sortie (80-82), de sorte à former au moins un filtre harmonique et de correction du facteur de puissance (8).

8. Convertisseur de tension (1) selon la revendication 7, **dans lequel** lesdits au moins trois condensateurs (C1-C3) sont choisis de sorte que la capacité (C) de chaque condensateur (C1-C3) soit sensiblement égale à :

$$\text{C} = \frac{Q}{3\omega V^2} \text{ ;}$$

avec :

   - $Q$ : puissance réactive nécessaire du filtre harmonique et de correction du facteur de puissance (8) pour obtenir un facteur de puissance de 1 ;
   - $V$ : tension simple d'un enroulement auxiliaire (72) ; et
   - $\omega$ : pulsation du signal d'entrée du convertisseur (1).

9. Convertisseur de tension selon la revendication 7 ou 8, **dans lequel** les redresseurs (3,4) dodécaphasés sont reliés en parallèle ou en série.


**Patentansprüche**

1. Dreiphasentransformator (10) für zwölfpulsige Thyristor-Gleichrichter mit einem ersten und einem zweiten Dreiphasen-Zweiweggleichrichter (3, 4), wobei der Dreiphasentransformator (10) umfasst:

   • einen Hauptmagnetkern (50) bestehend aus drei Schenkeln (51, 52, 53), die an ihren Enden durch zwei Jochs magnetisch parallel verbunden sind, wobei jeder der Schenkel aufnimmt:

      - zwei parallel geschaltete Primärwicklungen (73);
      - zwei Sekundärwicklungen (71),

   wobei drei der Sekundärwicklungen (71), die auf getrennte Schenkel gewickelt sind, in Sternschaltung an die Anschlüsse des Dreiphasentransformators (10) angeschlossen sind und so beschaffen sind, dass sie mit dem oben genannten ersten Dreiphasen-Zweiweggleichrichter (3) verbunden werden können, wobei die drei anderen Sekundärwicklungen (71) in Dreieckschaltung an die Anschlüsse des Dreiphasentransformators (10) angeschlossen sind und so beschaffen sind, dass sie mit dem oben genannten zweiten Dreiphasen-Zweiweggleichrichter (4) verbunden werden können; und
   • einen ersten Spulenkern (60), der drei Schenkel umfasst, wobei auf jedem der Schenkel eines der Paare von Primärwicklungen (73) gewickelt ist,

   ***dadurch gekennzeichnet, dass*** der Dreiphasentransformator (10) ferner umfasst:

• drei Paare von Hilfswicklungen (72), die zwischen den Primär- und Sekundärwicklungen um jeden Schenkel (51, 52, 53) des Hauptmagnetkerns (50) und des ersten Spulenkerns (60) gewickelt sind;

• einen zweiten Spulenkern (61), der drei Schenkel umfasst, wobei jeder der Schenkel zwischen einem Paar von Hilfswicklungen (72) und einem Paar von Primärwicklungen (73) angeordnet ist; und

• drei Ausgangsverbinder (80-82), die mit den Hilfswicklungen (72) verbunden sind und so beschaffen sind, dass sie mit mindestens drei Kondensatoren (C1-C3) mit den Hilfswicklungen (72) verbunden werden können, so dass mindestens ein Oberschwingungs- und Leistungsfaktorkorrekturfilter (8) gebildet wird.

2. Dreiphasentransformator nach Anspruch 1, **wobei** die Schenkel des zweiten Spulenkerns (61) Luftspalte umfassen und an ihren Enden durch zwei Feldabschlussjochs magnetisch verbunden sind.

3. Dreiphasentransformator nach einem der Ansprüche 1 und 2, **wobei** der Transformator zwei Reihen von drei Ausgangsverbindern (80-82) umfasst, die mit jedem Paar von zwei Hilfswicklungen (72) verbunden sind und so beschaffen sind, dass jedes Paar von zwei Hilfswicklungen (72) mit einem Satz (E1-E2) von drei Kondensatoren (C1-C3) verbinden, so dass zwei Oberschwingungs- und Leistungsfaktorkorrekturfilter (8) gebildet werden.

4. Dreiphasentransformator nach einem der Ansprüche 1 und 2, **wobei** der Transformator drei Ausgangsverbinder (80-82) umfasst, die mit jedem Paar von zwei Hilfswicklungen (72) verbunden sind, die paarweise miteinander verbunden sind und so beschaffen sind, dass sie drei Kondensatoren (C1-C3) mit den Hilfswicklungen (72) verbinden, so dass ein Oberschwingungs- und Leistungsfaktorkorrekturfilter (8) gebildet wird.

5. Dreiphasentransformator nach einem der Ansprüche 1 bis 4, **wobei** jede Primärwicklung (73) eines einzelnen Schenkels (51-53) auf eine der Hilfswicklungen (72) dieses Schenkels gewickelt ist, die ihrerseits auf eine der Sekundärwicklungen (71) dieses Schenkels gewickelt ist.

6. Dreiphasentransformator nach einem der Ansprüche 1 bis 5, **wobei** der zweite Spulenkern (61) so gewählt ist, dass die Kurzschlussspannung (UccX) im Wesentlichen gleich 30 % ist.

7. Spannungswandler (1) umfassend:

- einen Transformator (10) nach einem der Ansprüche 1 bis 6;
- zwei zwölfpulsige Dreiphasen-Zweiweggleichrichter (3, 4), und
- mindestens drei Kondensatoren (C1-C3), die mit den drei Ausgangsverbindern (80-82) verbunden sind, so dass mindestens ein Oberschwingungs- und Leistungsfaktorkorrekturfilter (8) gebildet wird.

8. Spannungswandler (1) nach Anspruch 7, **wobei** die mindestens drei Kondensatoren (C1-C3) so gewählt sind, dass die Kapazität (C) jedes Kondensators (C1-C3) im Wesentlichen der folgenden Gleichung entspricht:

$$C = \frac{Q}{3\omega V^2} \; ;$$

mit:

- *Q*: erforderliche Blindleistung des Oberwellen- und Leistungsfaktorkorrekturfilters (8), um einen Leistungsfaktor von 1 zu erhalten ;
- *V*: einfache Spannung einer Hilfswicklung (72); und
- $\omega$ : Pulsfrequenz des Eingangssignals des Wandlers (1).

9. Spannungswandler nach Anspruch 7 oder 8, **wobei** die zwölfpulsigen Gleichrichter (3, 4) parallel oder in Reihe geschaltet sind.

**Claims**

1. A three-phase transformer (10) for twelve-phase thyristor rectifier comprising first and second three-phase full-wave rectifiers (3, 4), the three-phase transformer (10) comprising:

• main magnetic core (50) composed of three columns (51, 52, 53) magnetically connected in parallel at their ends by two yokes, each of said columns receiving:

- two primary windings (73) connected in parallel;
- two secondary windings (71), three of the secondary windings (71) wound on separate columns being connected in a star configuration to the terminals of the three-phase transformer (10) and being adapted to be connected to said first three-phase full-wave rectifier (3), the other three secondary windings (71) being connected in a triangle configuration to the terminals of the three-phase transformer (10) and being adapted to be connected to said second three-phase full-wave rectifier (4); and

• a first inductive core (60) comprising three columns, on each of the columns being wound one of said pairs of primary windings (73),

*characterised* **in that** the three-phase transformer (10) also comprises:

• three pairs of auxiliary windings (72) wound, between the primary and secondary windings, around each column (51, 52, 53) of the main magnetic core (50) and of the first inductive core (60);
• a second inductive core (61) having three columns, each of the columns being disposed between a pair of auxiliary windings (72) and a pair of primary windings (73); and
• three output connectors (80-82) connected with the auxiliary windings (72) and being adapted to be connected to at least three capacitors (C1-C3) with the auxiliary windings (72), so as to form at least one harmonic and power factor correction filter (8).

2. The three-phase transformer according to claim 1, **wherein** the columns of the second inductive core comprise air gaps and are magnetically connected at their ends by two field closure yokes.

3. The three-phase transformer according to any one of claims 1 and 2, **wherein** the transformer comprises two series of three output connectors (80-82) connected to each pair of two auxiliary windings (72), and being adapted to connect each pair of two auxiliary windings (72) with a set (E1-E2) of three capacitors (C1-C3) so as to form two harmonic and power factor correction filters (8).

4. The three-phase transformer according to any one of claims 1 and 2, **wherein** the transformer comprises three output connectors (80-82) connected to each pair of two auxiliary windings (72) connected in pairs and adapted to connect three capacitors (C1-C3) with the auxiliary windings (72) so as to form a harmonic and power factor correction filter (8).

5. The three-phase transformer according to any one of claims 1 to 4, **wherein** each primary winding (73) of a same column (51-53) is wound on one of the auxiliary windings (72) of said column, itself wound on one of the secondary windings (71) of said column.

6. The three-phase transformer according to any one of claims 1 to 5, **wherein** the second inductive core (61) is chosen so that the short-circuit voltage (UccX) is substantially equal to 30%.

7. A voltage converter (1) comprising:

- a transformer (10) according to any one of claims 1 to 6;
- two three-phase full-wave twelve-phase rectifiers (3, 4); and
- at least three capacitors (C1-C3) connected to the three output connectors (80-82), so as to form at least one harmonic and power factor correction filter (8).

8. The voltage converter (1) according to claim 7, **wherein** said at least three capacitors (C1-C3) are chosen such that the capacitance (C) of each capacitor (C1-C3) is substantially equal to:

$$C = \frac{Q}{3\omega V^2} \; ;$$

With:

- $Q$: necessary reactive power of the harmonic and power factor correction filter (8) to obtain a power factor of 1;
- $V$: single voltage of an auxiliary winding (72); and
- $\omega$: pulsation of the input signal of the converter (1).

9. The voltage converter according to claim 7 or 8, **wherein** the twelve-phase rectifiers (3, 4) are connected in parallel or in series.

Fig.1

Fig. 2

Fig. 3

Fig. 4

Fig. 5

Fig. 6

Fig. 7

Fig. 8

**Fig. 9**

**Fig. 10**

**Fig. 11**

**EP 3 493 230 B1**

**RÉFÉRENCES CITÉES DANS LA DESCRIPTION**

**Documents brevets cités dans la description**

- FR 3033930